# EUROPÄISCHE PATENTSCHRIFT

(11) **EP 3 553 357 B1**
(45) Veröffentlichungstag und Bekanntmachung des Hinweises auf die Patenterteilung: **24.02.2021**
(21) Anmeldenummer: 19165844.2
(22) Anmeldetag: 28.03.2019
(51) Int. Cl.: F16K 37/00

(54) **ABSPERRKLAPPE**
SHUT-OFF VALVE
CLAPET D'ARRÊT

(30) Priorität: 11.04.2018 DE 202018101944 U
(43) Veröffentlichungstag der Anmeldung: 16.10.2019
(73) Patentinhaber: EBRO Armaturen Gebr. Bröer GmbH, 58135 Hagen (DE)
(72) Erfinder: Jortzik, Matthias, 58256 Ennepetal (DE)
(74) Vertreter: Köchling, Conrad-Joachim

(56) Entgegenhaltungen:
- EP-A1- 3 235 546
- DE-A1- 10 128 447

## Beschreibung

Die Erfindung betrifft eine Armatur zur Steuerung des Durchflusses eines Fluids in einer Rohrleitung, insbesondere Absperrklappe, zumindest aufweisend ein Gehäuse und eine etwa scheibenförmige Klappe, welche innerhalb der Rohrleitung angeordnet ist und zwischen einer Öffnungsstellung, in der die Klappe parallel zur Fließrichtung des Fluids angeordnet ist und einer Schließstellung, in der die Klappe quer zur Fließrichtung des Fluids angeordnet ist, beliebig verstellbar ist, wobei die Verstellung mittels eines das Gehäuse durchgreifenden und mit der Klappe verbundenen Stellmittels erfolgt, wobei an oder in der Armatur mindestens ein Sensor zur Erfassung von steuerungsrelevanten oder prozessrelevanten Daten und ein Mikrocontroller mit elektrischer Energiequelle und drahtloser Schnittstelle angeordnet ist, wobei der Sensor oder die Sensoren mit dem Mikrokontroller mit drahtloser Schnittstelle kommunizieren und die erfassten Daten mittels der drahtlosen Schnittstelle des Mikrokontrollers an eine außerhalb der Armatur angeordnete Empfangs- und Auswerteeinheit versendet oder versendbar sind.

Derartige Armaturen, die in der Praxis auch häufig als Absperrklappen bezeichnet werden, sind im Stand der Technik weit verbreitet und in vielen verschiedenen Größen und Ausführungen bekannt. Derartige Absperrklappen werden in der Regel als sogenannte Doppelflanschklappen ausgebildet, um diese zwischen zwei an jeweils einem Rohrende ausgebildeten Flanschen anzuordnen.

Zur Verringerung beziehungsweise Erhöhung der Menge des die Armatur durchfließenden Fluids kann die Klappe bei vielen Ausführungsformen stufenlos aus einer parallel zur Fließrichtung des Fluids angeordneten Öffnungsstellung in die quer zur Fließrichtung des Fluids angeordnete Schließstellung verstellt werden. In dieser Schließstellung ist der Durchfluss des Fluids durch die Armatur vollständig unterbunden.

Die genaue Stellung der Klappe, das heißt die Position der Klappe zwischen der Öffnungsstellung und der Schließstellung, kann häufig gar nicht oder nur mittels mechanischer Anzeigeinstrumente direkt an der Armatur abgelesen werden. Hierzu ist es erforderlich, dass ein Bediener sich der Armatur annähert und den jeweiligen Klappenstand, der die Durchflussmenge und Durchflussgeschwindigkeit des Fluids bestimmt, direkt von der Armatur abliest.

Eine Armatur ähnlicher Art ist beispielsweise aus der EP 3 235 546 A1 bekannt.

Aufgrund des eingangs genannten Standes der Technik liegt der vorliegenden Erfindung die Aufgabe zugrunde, eine Armatur der eingangs genannten Art, insbesondere eine Absperrklappe, hinsichtlich ihres Anwendungsbereiches zu erweitern, wobei insbesondere steuerungsrelevante und/oder prozessrelevante Daten an oder in der Armatur erfasst und gegebenenfalls dort gespeichert sind, wobei diese Daten kontaktlos von außen zugreiflich sind.

Zur Lösung dieser Aufgabe schlägt die Erfindung vor, dass das Gehäuse eine Verschlussschraube aufweist, innerhalb derer der Mikrocontroller mit elektrischer Energiequelle und drahtloser Schnittstelle oder das Sensormodul angeordnet ist.

Ein derartiger innerhalb der Verschlussschraube angeordneter Mikrocontroller stellt eine besonders einfach nachzurüstende Lösung dar, mittels derer entsprechende Daten erfasst und drahtlos versendet werden können. Hierzu muss nicht die gesamte Armatur neu konstruiert werden, sondern es wird lediglich die bereits vorhandene Verschlussschraube des Gehäuses gegen eine erfindungsgemäße Verschlussschraube mit Sensormodul ausgetauscht. Dies kann auf besonders schnelle und einfache Art und Weise erfolgen und das entsprechende Sensormodul kann direkt nach dem Einbau in das Gehäuse die erfassten Daten sowohl speichern, als auch mittels der drahtlosen Schnittstelle die Daten an eine außerhalb der Armatur angeordnete Empfangseinheit versenden.

Bei einer derartigen erfindungsgemäßen Lösung können durch den Sensor oder die Sensoren sämtliche steuerungsrelevanten oder prozessrelevanten Daten erfasst werden. Die erfassten Daten werden durch den Mikrocontroller, der in der Regel einen Prozessor und einen Speicher aufweist, erfasst und gespeichert und durch die drahtlose Schnittstelle an eine außerhalb der Armatur angeordnete Empfangseinheit versendet. Hierdurch ist es möglich, auch von großer Entfernung ohne räumliche Anwesenheit eines Bedieners, auf die vom Sensor der Armatur erfassten Daten zuzugreifen, um beispielsweise steuerungsrelevante oder prozessrelevante Daten, die den Beitrieb oder die unmittelbare Umgebung der Armatur betreffen, aus der Ferne zu erfassen und gegebenenfalls weiter zu verarbeiten.

Insbesondere kann besonders bevorzugt vorgesehen sein, dass der Sensor geeignet ist zur Erfassung der Temperatur, des inneren oder die Armatur außen umgebenen Drucks, der Feuchtigkeit, einer Leckage, von Vibrationen, der Position der Klappe, der Wegmessung des Fluids, von auftretenden Kräften, zur Durchführung von kapazitiven Messungen wie beispielsweise der Schichtdicke einer Dichtung, des Drehmoments welches erforderlich ist zur Verstellung der Klappe.

Durch derartige Sensoren können nahezu alle steuerungsrelevanten oder prozessrelevanten Daten des Betriebes der Armatur erfasst und entsprechend ausgewertet werden. So kann hierdurch neben der exakten Klappenstellung auch beispielsweise eine Leckage einer entsprechenden Armatur oder ein in naher Zukunft auftretender Defekt beispielsweise einer Dichtung, deren Schichtdicke sich beispielsweise durch Verschleiß bereits verringert hat, sodass ein Defekt in naher Zukunft erfolgt, erkannt und an entsprechende Empfangseinheiten mittels der drahtlosen Schnittstelle versendet werden. So können entsprechende Empfangseinheiten beispielsweise in einer zentralen Verwaltung Warnmeldungen bezüglich eine drohenden oder in naher Zukunft erscheinenden Defektes erhalten, um entsprechende Gegenmaßnahmen einzuleiten. Detektiert beispielsweise ein Sensor eine zu geringe Schichtdicke einer Dichtung, so kann dies eine Warnmeldung aktivieren, sodass die Dichtung bereits bevor eine Leckage entsteht erneuert werden kann.

Analog kann dies bei sämtlichen weiteren durch den oder die Sensoren erfassten Parametern erfolgen.

Erfindungsgemäß ist vorgesehen, dass der Sensor aus einem Sensormodul besteht, wobei das Sensormodul den Mikrocontroller, einen oder mehrere Sensoren, eine elektrische Energiequelle und die drahtlose Schnittstelle umfasst.

Die Verwendung eines derartigen Sensormoduls bietet eine besonders platzsparende Lösung zur Erfassung, Speicherung und drahtlosen Weitergabe der erfassten Daten. Derartige Sensormodule können je nach Baugröße der Armatur entsprechend vorgefertigt werden und es können gegebenenfalls auch bestehende Armaturen mit diesen Sensormodulen nachgerüstet werden.

Weiter kann besonders bevorzugt vorgesehen sein, dass die drahtlose Schnittstelle durch eine bidirektionale Funkschnittstelle, beispielsweise nach einem WLAN- oder Bluetooth-Standard, gebildet ist.

Mittels einer derartigen Funkschnittstelle kann je nach Einsatzbereich eine größere oder geringere Reichweite der zu versenden Daten ermöglicht werden. So ist beispielsweise durch die Anordnung einer drahtlosen Schnittstelle nach dem Bluetooth-Standard eine eher geringere Reichweite und nach dem WLAN-Standard eine höhere Reichweite möglich.

Dadurch, dass die Schnittstelle bidirektional ausgebildet ist, ist auch das Senden von Daten an den Mikrocontroller ermöglicht, sodass beispielsweise auch zu einem späteren Zeitpunkt veränderte Software an diesen gesendet werden kann. Auch können beispielsweise Steuerbefehle an die Armatur gesendet und von dieser empfangen werden.

Alternativ kann besonders bevorzugt vorgesehen sein, dass die drahtlose Schnittstelle durch eine unidirektionale Funkschnittstelle, beispielsweise einen RF-ID Sender, gebildet ist.

Durch eine derartige Schnittstelle ist ein besonders stromsparender und somit langfristiger Betrieb ermöglicht, ohne die Energiequelle zu erneuern, aufzuladen oder austauschen zu müssen.

Ein Ausführungsbeispiel der Erfindung ist in den Figuren dargestellt und im Folgenden näher beschrieben.

Es zeigt:
- Figur 1: eine erfindungsgemäße Absperrklappe in Fließrichtung des Fluids gesehen;
- Figur 2: desgleichen in Seitenansicht geschnitten.

In den Figuren ist eine Armatur zur Steuerung des Durchflusses eines Fluids in einer Rohrleitung gezeigt. Im Ausführungsbeispiel ist die Armatur durch eine Absperrklappe 1 gebildet. Die Armatur weist zumindest ein Gehäuse 2 und eine etwa scheibenförmige Klappe 3 auf. Die in den Figuren gezeigte Armatur ist als sogenannte Zwischenflanscharmatur ausgebildet. Das heißt, diese Armatur ist zwischen zwei mit einem Flansch versehenden Enden einer Rohrleitung anzuordnen oder angeordnet. Die scheibenförmige Klappe 3 ist dabei innerhalb der Rohrleitung angeordnet und im Ausführungsbeispiel stufenlos zwischen einer Öffnungsstellung, in der die Klappe 3 parallel zur Fließrichtung des Fluids angeordnet ist und einer Schließstellung, in der die Klappe 3 quer zur Fließrichtung des Fluids angeordnet ist, verstellbar. Die Verstellung zwischen der Öffnungsstellung und der Schließstellung der Klappe 3 und zurück in die Öffnungsstellung erfolgt im Ausführungsbeispiel mittels eines mit der Klappe 3 verbundenen Stellmittels 4.

Erfindungsgemäß ist an oder in der Armatur mindestens ein Sensor zur Erfassung von steuerungsrelevanten oder prozessrelevanten Daten und ein Mikrocontroller mit elektrischer Energiequelle und drahtloser Schnittstelle angeordnet. Dabei kommuniziert jeder Sensor mit dem Mikrocontroller mit drahtloser Schnittstelle und die erfassten Daten sind mittels der drahtlosen Schnittstelle des Mikrocontrollers an eine außerhalb der Armatur anordnete Empfangseinheit versendbar.

Eine derartige Versendung mittels der drahtlosen Schnittstelle kann dabei kontinuierlich oder diskontinuierlich, beispielsweise nach Abruf, erfolgen. Der oder die Sensoren sind dabei geeignet zur Erfassung verschiedenster steuerungsrelevanter oder prozessrelevanter Daten der Armatur, wie insbesondere der inneren oder die Armatur außen umgebenden Temperatur, des inneren oder die Armatur außen umgebenden Drucks, der Feuchtigkeit, einer Leckage, von Vibrationen, von der Position der Klappe, der Weg und somit Geschwindigkeitsmessung des Fluids, von auftretenden Kräften, zur Durchführung von kapazitiven Messungen, wie beispielsweise der Schichtdicke einer Dichtung, des Drehmoments, welches erforderlich ist zur Verstellung der Klappe 3 oder gegebenenfalls weiterer die Armatur betreffender Parameter.

Im Ausführungsbeispiel der Erfindung besteht der Sensor aus einem Sensormodul, wobei das Sensormodul neben dem Sensor auch den Mikrocontroller, einen oder mehrere Sensoren zur Erfassung von Parametern, eine elektrische Energiequelle und die drahtlose Schnittstelle umfasst.

Ein derartiges Sensormodul stellt eine besonders platzsparende Möglichkeit zur Kombination eines oder mehrerer Sensoren mit einem Mikrocontroller und elektrischer Energiequelle und drahtloser Schnittstelle dar.

Des Weiteren ist im Ausführungsbeispiel die drahtlose Schnittstelle durch eine bidirektionale Funkschnittstelle gebildet, die nach dem WLAN-Standard Daten versendet und dabei geeignet ist, Daten zu empfangen, die entsprechend an den Prozessor und den Speicher des Mikrocontrollers weitergegeben und dort verarbeitet oder gespeichert werden können.

Hierdurch ist beispielsweise ein späteres Übertragen von Betriebssoftware in das Sensormodul ermöglicht. Auch können Steuerbefehle an die Armatur versendet und von dieser empfangen werden.

Zudem ist durch die nach dem WLAN-Standard gebildete Funkschnittstelle eine besonders große Sendereichweite des Sensormoduls ermöglicht.

Alternativ und in den Figuren nicht dargestellt, kann die drahtlose Schnittstelle auch durch eine Bluetooth-Schnittstelle gebildet sein, welche auch eine bidirektionale Funkschnittstelle darstellt.

Alternativ und in den Figuren nicht gezeigt, kann die drahtlose Schnittstelle auch durch eine unidirektionale Funkschnittstelle, beispielsweise durch einen RF-ID-Sender, gebildet sein. Ein derartiger RF-ID-Sender benötigt nur einen äußert geringen Strombedarf, sodass eine besonders hohe Betriebsdauer beispielsweise mittels einer Batterie ermöglicht ist.

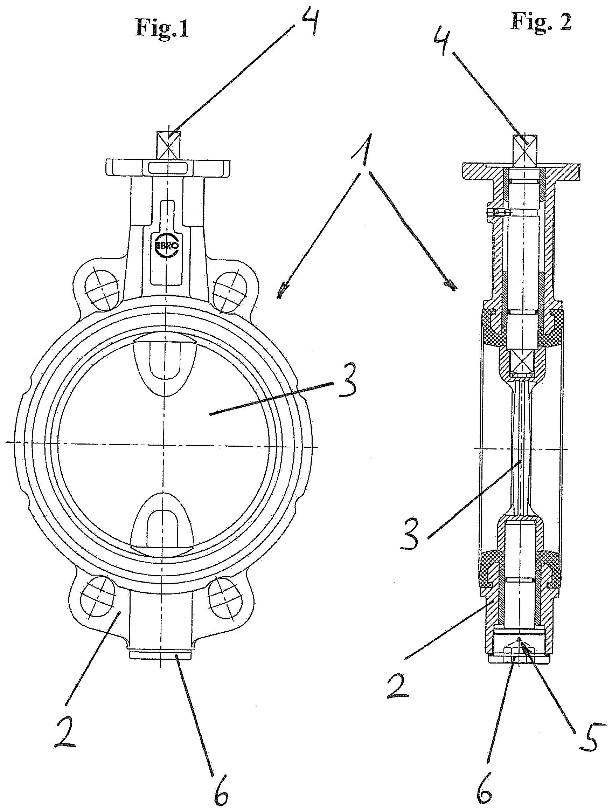

Im Ausführungsbeispiel ist wie insbesondere aus Figur 2 ersichtlich, ein Sensormodul 5 innerhalb einer Verschlussschraube 6 des Gehäuses 2 angeordnet. Ein derartiges Sensormodul 5, welches innerhalb einer Verschlussschraube 6 angeordnet ist, kann je nach Ausführungsform der Armatur auch bei bestehenden Armaturen nachgerüstet werden, um den Funktionsumfang der Armatur um entsprechende Sensoren mit Funkschnittstelle zu erweitern.

Die Stromversorgung der erfindungsgemäßen Armaturen kann durch eine Langzeitbatterie oder durch einen beispielsweise berührungslos mittels Induktion aufladbaren Akkumulator, welcher sich innerhalb der Armatur befindet, erfolgen.

Eine derartige erfindungsgemäße Armatur ist in ihrem Funktionsumfang deutlich gegenüber bekannten Armaturen, insbesondere Absperrklappen, erweitert und ermöglicht eine auf Wunsch kontinuierliche Überwachung sämtlicher steuerungsrelevanter und prozessrelevanter Daten der Armatur, insbesondere der exakten Klappenstellung und weiterer Parameter, wie beispielsweise Temperatur des Fluids und vorherrschender Drücke innerhalb der Rohrleitung im Bereich der Armatur.

### Bezugszeichenliste:

- 1: Absperrklappe
- 2: Gehäuse
- 3: Klappe
- 4: Stellmittel
- 5: Sensormodul
- 6: Verschlussschraube

## Patentansprüche

1. Armatur zur Steuerung des Durchflusses eines Fluids in einer Rohrleitung, insbesondere Absperrklappe (1), zumindest aufweisend ein Gehäuse (2) und eine etwa scheibenförmige Klappe (3), welche innerhalb der Rohrleitung angeordnet ist und zwischen einer Öffnungsstellung, in der die Klappe (3) parallel zur Fließrichtung des Fluids angeordnet ist und einer Schließstellung, in der die Klappe (3) quer zur Fließrichtung des Fluids angeordnet ist, beliebig verstellbar ist, wobei die Verstellung mittels eines das Gehäuse (2) durchgreifenden und mit der Klappe verbundenen Stellmittels (4) erfolgt, wobei an oder in der Armatur mindestens ein Sensor zur Erfassung von steuerungsrelevanten oder prozessrelevanten Daten und ein Mikrocontroller mit elektrischer Energiequelle und drahtloser Schnittstelle angeordnet ist, wobei der Sensor oder die Sensoren mit dem Mikrokontroller mit drahtloser Schnittstelle kommunizieren und die erfassten Daten mittels der drahtlosen Schnittstelle des Mikrokontrollers an eine außerhalb der Armatur angeordnete Empfangs- und Auswerteeinheit versendet oder versendbar sind,
**dadurch gekennzeichnet, dass** das Gehäuse (2) eine Verschlussschraube (6) aufweist, innerhalb derer der Mikrocontroller mit elektrischer Energiequelle und drahtloser Schnittstelle oder ein Sensormodul (5) angeordnet ist, aus dem der Sensor besteht, wobei das Sensormodul (5) den Mikrocontroller, einen oder mehrere Sensoren, eine elektrische Energiequelle und die drahtlose Schnittstelle umfasst.

2. Armatur nach Anspruch 1, **dadurch**
**gekennzeichnet, dass** der Sensor geeignet ist zur Erfassung der Temperatur, des inneren oder die Armatur außen umgebenen Drucks, der Feuchtigkeit, einer Leckage, von Vibrationen, der Position der Klappe, der Wegmessung des Fluids, von auftretenden Kräften, zur Durchführung von kapazitiven Messungen wie beispielsweise der Schichtdicke einer Dichtung, des Drehmoments welches erforderlich ist zur Verstellung der Klappe (3).

3. Armatur nach einem der Ansprüche 1 bis 2,
**dadurch gekennzeichnet, dass** die drahtlose Schnittstelle durch eine bidirektionale Funkschnittstelle, beispielsweise nach einem WLAN- oder Bluetooth-Standard, gebildet ist.

4. Armatur nach einem der Ansprüche 1 bis 2,
**dadurch gekennzeichnet, dass** die drahtlose Schnittstelle durch eine unidirektionale Funkschnittstelle, beispielsweise einen RF-ID-Sender, gebildet ist.

## Claims

1. A valve for controlling the flow of a fluid in a piping, in particular a shut-off valve (1), at least including a housing (2) and an approximately disc-shaped flap (3), which is arranged within the piping and is arbitrarily adjustable between an opened position, in which the flap (3) is arranged in parallel to the direction of flow of the fluid, and a closed position, in which the flap (3) is arranged transversely to the direction of flow of the fluid, the adjustment being effected by means of an actuator (4) passing through the housing (2) and being connected to the flap, at or in the valve at least one sensor for the detection of control-relevant or process-relevant data and a microcontroller with an electrical power supply and a wireless interface being arranged, the sensor or the sensors communicating with the microcontroller with the wireless interface and the detected data being transmitted or transmittable by means of the wireless interface of the microcontroller to a reception and evaluation unit arranged outside of the valve, **characterized by** that the housing (2) includes a closure screw (6), within which the microcontroller with electrical power supply and wireless interface or a sensor module (5) is arranged, of which module the sensor consists, the sensor module (5) comprising the microcontroller, one or more sensors, an electrical power supply, and the wireless interface.

2. The valve of claim 1, **characterized by** that the sensor is suitable for the detection of the temperature, of the inside pressure or the outside pressure surrounding the valve, of the humidity, of a leakage, of vibrations, of the position of the flap, of the travel measurement of the fluid, of acting forces, for performing capacitive measurements such as, for example, of the layer thickness of a seal, of the torque that is required for the adjustment of the flap (3).

3. The valve of one of claims 1 to 2, **characterized by** that the wireless interface is formed by a bidirectional radio interface, for instance according to a WLAN or bluetooth standard.

4. The valve of one of claims 1 to 2, **characterized by** that the wireless interface is formed by a unidirectional radio interface, for instance an RFID transmitter.

## Revendications

1. Clapet pour commander l'écoulement d'un fluide dans un conduit tubulaire, en particulier un clapet d'arrêt (1), au moins comportant un boîtier (2) et un clapet (3) environ en forme de disque, qui est arrangé au-dedans du conduit tubulaire et est arbitrairement réglable entre une position ouverte, dans laquelle le clapet (3) est arrangé en parallèle au sens d'écoulement du fluide et une position fermée, dans laquelle le clapet (3) est arrangé transversalement au sens d'écoulement du fluide, le réglage étant effectué au moyen d'un actionneur (4) passant à travers le boîtier (2) et étant lié au clapet, à ou dans le clapet au moins un capteur pour l'acquisition de données relevantes de la commande ou du procédé et un microcontrôleur avec une source d'énergie électrique et une interface sans fil étant arrangé, le capteur ou les capteurs communiquant avec le microcontrôleur comprenant l'interface sans fil et les données acquises étant transmises ou transmissibles au moyen de l'interface sans fil du microcontrôleur à une unité de réception et évaluation arrangée à l'extérieur du clapet, **caractérisé en ce que** le boîtier (2) comporte une vis de fermeture (6), avec laquelle le microcontrôleur avec la source d'énergie électrique et l'interface sans fil ou un module capteur (5) est arrangé, en lequel le capteur consiste, le module capteur (5) comprenant le microcontrôleur, un ou plusieurs capteurs, une source d'énergie électrique et l'interface sans fil.

2. Clapet selon la revendication 1, **caractérisé en ce que** le capteur est apte à l'acquisition de la température, de la pression à l'intérieur ou à l'extérieur du clapet, de l'humidité, d'une fuite, de vibrations, de la position du clapet, de la mesure de la course du fluide, de forces agissantes, pour exécuter des mesurages capacitifs comme par exemple de l'épaisseur de la couche d'un joint d'étanchéité, du couple qui est nécessaire pour le réglage du clapet (3).

3. Clapet selon une des revendications 1 à 2, **caractérisé en ce que** l'interface sans fil est réalisée d'une interface radio bidirectionnelle, par exemple selon une norme WLAN ou bluetooth.

4. Clapet selon une des revendications 1 à 2, **caractérisé en ce que** le l'interface sans fil est réalisée d'une interface radio unidirectionnelle, par exemple un module RFID.
